# EUROPEAN PATENT APPLICATION

(11) **EP 0 837 398 A2**
(43) Date of publication of application: **22.04.1998**
(21) Application number: 97308251.4
(22) Date of filing: 17.10.1997
(51) Int. Cl.: G06F 13/38

(54) **Host interface circuit for image forming apparatus**

(30) Priority: 17.10.1996 KR 9646537
(71) Applicant: Samsung Electronics Co., Ltd., Suwon-city, Kyungki-do (KR)
(72) Inventor: Lee, Sung-Hee, Gunpo-city, Kyungki-do (KR)
(74) Representative: Tunstall, Christopher Stephen

(57) **Abstract**

A host interface circuit, for interfacing parallel data received from a host to an image forming apparatus, is described. A select logic circuit generates alternate select signals on receipt of successive strobe input signals from a host. Data received form the host is latched into first and second latch circuits in response to the select signals. In this way, data received from the host is latched in alternate latch circuits on receipt of successive strobe input signals from the host.

## Description

### Background of the Invention

The present invention relates to a host interface circuit for interfacing parallel data received from a host with an image forming apparatus.

Generally, an image forming apparatus, a printer for example, is connected to a host such as a personal computer to transmit and receive data to and from the host. To this end, the image forming apparatus includes a host interface circuit for interfacing the data transmitted to and received from the host.

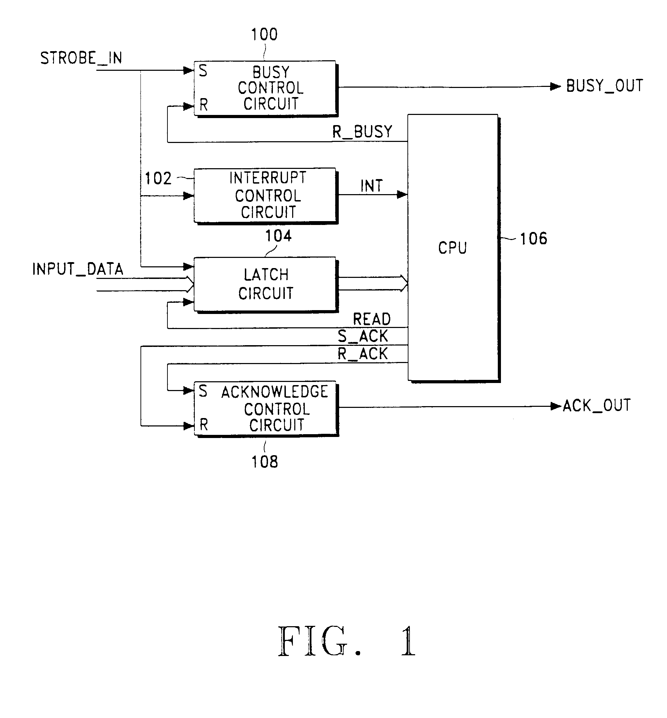

One example of a conventional host interface circuit used to interface the data received from the host is shown in Fig. 1. The conventional host interface circuit includes, as shown in Fig. 1, a busy control circuit 100, an interrupt control circuit 102, a latch circuit 104, a central processing unit (CPU) 106, and an acknowledge control circuit 108. The busy control circuit 100 asserts a busy signal BUSY_OUT according to a strobe input signal STROBE_IN received from a host. The interrupt control circuit 102 generates an interrupt signal INT according to the strobe input signal STROBE_IN. Data received from the host is latched in the latch circuit 104.

The CPU 106 supplies a read signal READ to the latch circuit 104 in response to the interrupt signal INT to read data latched in the latch circuit 104. Moreover, the CPU 106 generates an acknowledge setting signal S_ACK to set the acknowledge control circuit 108 and asserts an acknowledge signal ACK_OUT. After a given time, the CPU 106 generates a busy resetting signal R_BUSY and an acknowledge resetting signal R_ACK. Then the busy control circuit 100 and the acknowledge control circuit 108 are reset, and the busy signal BUSY_OUT and the acknowledge signal ACK_OUT are negated.

If such a host interface circuit is used in a low-speed image forming apparatus and connected to a high-speed host, the host may transmit subsequent data before the image forming apparatus has generated the busy signal arising from the previous data, e.g. data of one byte, as the case may be. Then, the subsequent data collides with the previous data and the data is lost. That is, since the conventional host interface circuit receives data only one byte at a time, if it is used in a low-speed image forming apparatus and connected to a high-speed host, there may be a collision between data received from the host and there may be loss of data. Furthermore, since the acknowledge signal is generated by the CPU, the CPU is subject to load.

### Summary of the Invention

Therefore, it is an objective of the present invention to provide a host interface circuit which can prevent a collision between data and loss of data. It is another object of the present invention to provide a host interface circuit which can improve interface speed with a host.

Accordingly, the present invention provides a host interface circuit, for interfacing parallel data received from a host to an image forming apparatus, comprising a select logic circuit for generating alternate select signals on receipt of successive strobe input signals from a host and first and second latch circuits for latching data received from the host in response to the select signals, whereby data received from the host is latched in alternate latch circuits on receipt of successive strobe input signals from the host.

Preferably, the select logic circuit is adapted to activate alternate first and second select signals on receipt of successive strobe input signals and the first and second latch circuits are adapted to latch data in response to the first and second select signals respectively.

The host interface circuit preferably comprises means for sequentially reading the data latched in the latch circuits. For example, the means for sequentially reading the data may comprise:
a select control circuit for switching the logic state of a multiplexer select signals whenever a read signal is received; and
a multiplexer for outputting data latched in the first or second latch circuit according to the logic state of the multiplexer select signal.

Preferably, the host interface circuit comprises:
a first interrupt control circuit for generating a first interrupt signal in response to the first select signal and for clearing the first interrupt signal on receipt of a first interrupt clear signal;
a second interrupt control circuit for generating a second interrupt signal in response to the second select signal and for clearing the second interrupt signal on receipt of a second interrupt clear signal; and
a CPU interrupt control circuit for generating a CPU interrupt signal each time the first or second interrupt signals are generated.

Preferably, the CPU is adapted to generate such a read signal each time the CPU interrupt signal is generated and to generate whichever of the first and second interrupt clear signals corresponds to the current interrupt.

The CPU interrupt control circuit may be adapted, on receipt of another interrupt signal before a previous interrupt signal is cleared, to maintain the CPU interrupt signal until that other interrupt signal is cleared. Preferably, the CPU is adapted, if the CPU interrupt signal is maintained after an interrupt clear signal is generated, to generate a further read signal and the other interrupt clear signal.

The host interface circuit may further comprise:
an acknowledge start control circuit for generating an acknowledge start signal when either interrupt signal is cleared by an interrupt clear signal; and
an acknowledge control circuit for asserting an acknowledge signal to the host in response to the acknowledge start signal, negating the acknowledge signal after a given time and generating an acknowledge end signal.

Preferably, the acknowledge start control circuit is adapted, if another interrupt signal is active after a previous interrupt signal has been cleared, to generating the acknowledge start signal when the other interrupt signal is cleared by an interrupt clear signal.

The host interface circuit preferably comprises means for asserting a busy signal to the host from receipt of the strobe signal until the acknowledge signal is ended. For example, the means for asserting the busy signal may comprise:
a first busy control circuit for generating a hardware busy signal in response to the strobe input signal until the acknowledge end signal is generated;
a second busy control circuit for generating a software busy signal under the control of the CPU; and
a third busy circuit for asserting the busy signal when both the hardware busy signal and said software busy signal are in an asserted state.

Preferably, the host interface circuit further comprises a noise filter for filtering the strobe input signal and supplying the filtered strobe input signal to the select logic circuit.

### Brief Description of the Drawings

The present invention will now be described by way of example with reference to the accompanying drawings in which:
Fig. 1 is a block diagram showing a conventional host interface circuit;
Fig. 2 is a block diagram showing a host interface circuit according to the present invention;
Fig. 3 is a flow chart showing the processing procedure of the CPU shown in Fig. 2;
Fig. 4 is a timing chart showing the operation of each portion of Fig. 2 when data is received normally from a host; and
Fig. 5 is a timing chart showing the operation of each portion of Fig. 2 when data is received abnormally from a host.

### Detailed Description of the Preferred Embodiment

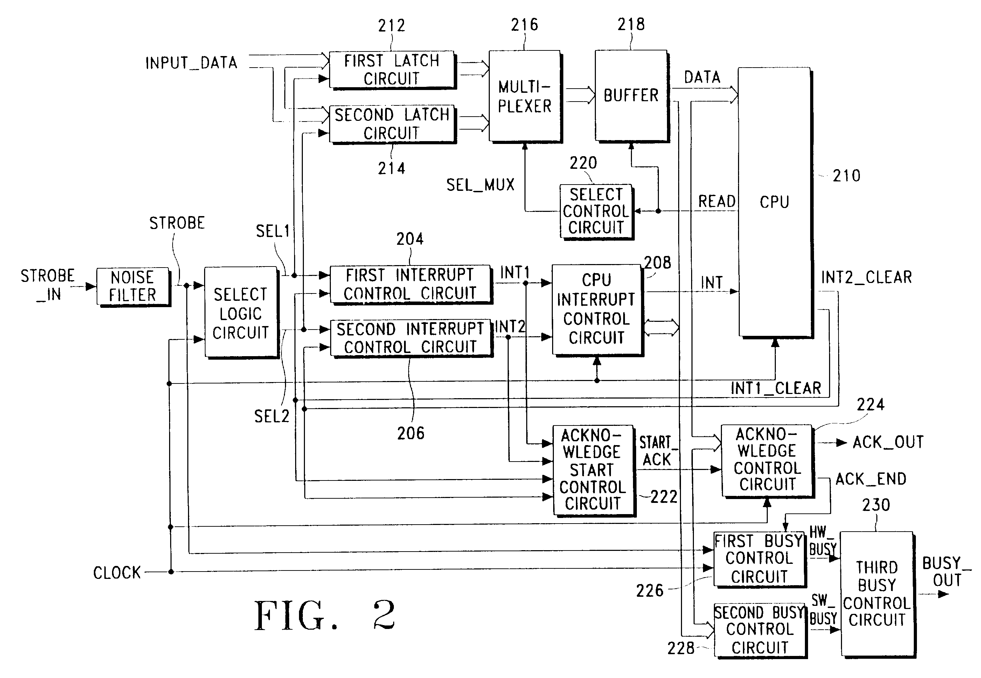

Referring to Fig. 2, a strobe input signal STROBE_IN and input data INPUT_DATA are received from a host, and an acknowledge signal ACK_OUT and a busy signal BUSY_OUT are transmitted to the host. A clock signal CLOCK is supplied as a reference clock to a select logic circuit 202, a CPU interrupt control circuit 208, a CPU 210, an acknowledge control circuit 224, and a first busy control circuit 226.

A noise filter 200 filters the strobe input signal STROBE_IN received from the host and generates a strobe signal STROBE. The strobe signal STROBE is applied to the select logic circuit 202 and the first busy control circuit 226. The select logic circuit 202 alternately activates a first select signal SEL1 and a second select signal SEL2 each time the strobe input signal STROBE_IN, that is, the strobe signal STROBE is received. The first select signal SEL1 is applied to a first latch circuit 212 and a first interrupt control circuit 204. The second select signal SEL2 is applied to a second latch circuit 214 and a second interrupt control circuit 206.

The first and second interrupt control circuits 204 and 206 generate first and second interrupt signals INT1 and INT2 in response to the first and second select signals SEL1 and SEL2, respectively, and are respectively cleared by first and second interrupt clear signals INT1_CLEAR and INT2_CLEAR generated from the CPU 210. The first and second interrupt signals INT1 and INT2 are respectively supplied to the CPU interrupt control circuit 208 and an acknowledge start control circuit 222. The CPU interrupt control circuit 208 generates a CPU interrupt signal INT each time the first and second interrupt signals INT1 and INT2 are generated and supplies the CPU interrupt signal INT to the CPU 210.

The first and second latch circuits 212 and 214 alternately latch the input data INPUT_DATA received from the host together with the strobe input signal STROBE_IN in response to the first and second select signals SEL1 and SEL2. A multiplexer 216 alternately generates data latched in the first and second latch circuits 212 and 214 according to a multiplexer select signal SEL_MUX. A select control circuit 220 alternately generates the multiplexer select signal SEL_MUX of a different logic state whenever a read signal READ is generated from the CPU 210. A buffer 218 stores data output from the multiplexer 216 by the read signal READ.

The CPU 210 generates the read signal READ when the CPU interrupt signal INT is supplied and reads data stored in the buffer 218. The CPU 210 also generates one of the first and second interrupt clear signals INT1_CLEAR and INT2 CLEAR corresponding to a current interrupt.

The acknowledge start control circuit 222 generates an acknowledge start signal START_ACK when the first and second interrupt signals INT1 and INT2 are cleared by the first and second interrupt clear signals INT1_CLEAR and INT2_CLEAR. The acknowledge control circuit 224 asserts the acknowledge signal ACK_OUT to the host in response to the acknowledge start signal START_ACK, negates the acknowledge signal ACK_OUT after a given time and generates an acknowledge end signal ACK_END.

The first busy control circuit 226 generates a hardware busy signal HW BUSY in response to the strobe signal STROBE until the acknowledge end signal ACK_END is generated. A second busy control circuit 228 generates a software busy signal SW_BUSY under the control of the CPU 210. A third busy circuit 230 asserts the busy signal BUSY_OUT to the host when both the hardware busy signal HW_BUSY and the software busy signal SW_BUSY are in an asserted state.

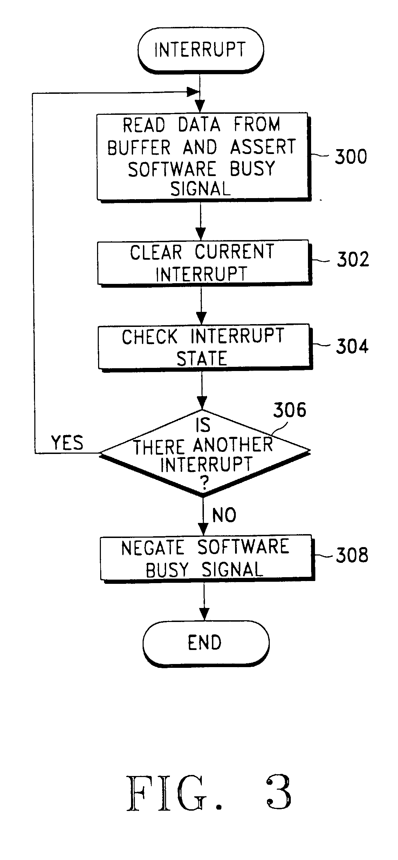

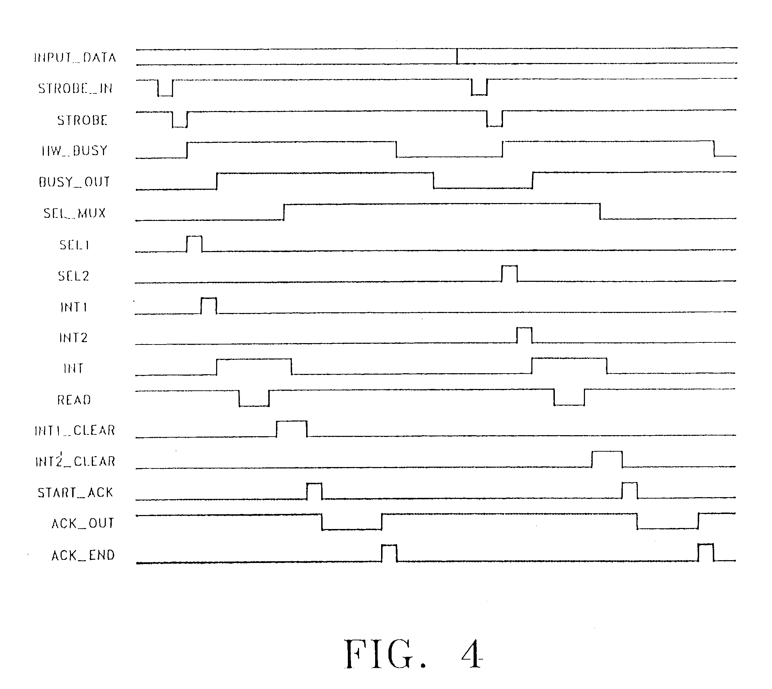

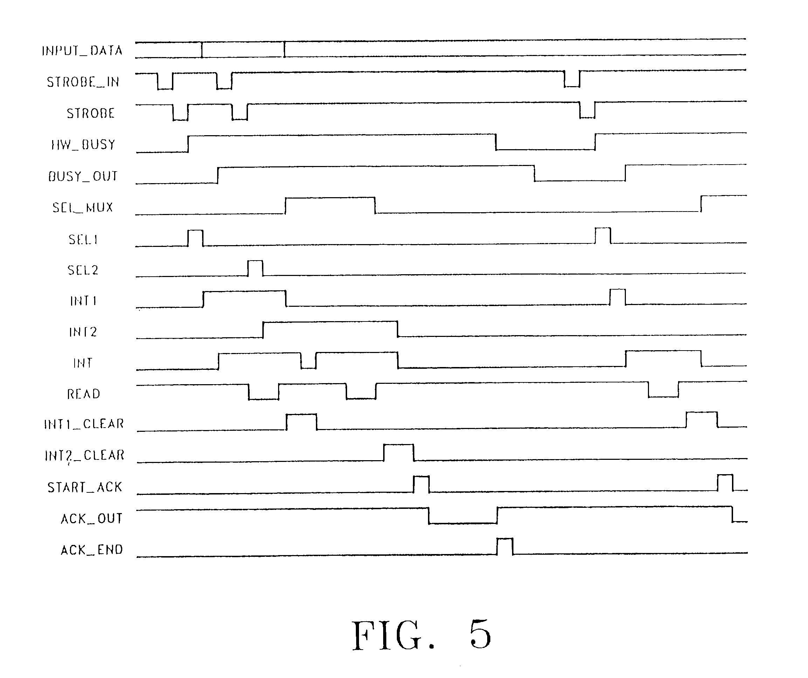

Fig. 3 is a flow chart showing the processing procedure of the CPU 210 shown in Fig. 2. Fig. 4 is a timing chart showing the operation of each portion of Fig. 2 when data is normally received from the host, that is, when the host transmits subsequent data after the host transmits data of one byte and then the third busy control circuit 230 generates the busy signal BUSY_OUT. Fig. 5 is a timing chart showing the operation of each portion of Fig. 2 when the host transmits subsequent data before the third busy control circuit 230 generates the busy signal BUSY_OUT after the host transmits data of one byte.

In operation, if the strobe input signal STROBE_INPUT is received from the host, the noise filter 200 generates an input signal over a constant width as the strobe signal to prevent interface errors caused by noise. The first, second and third busy control circuits 226, 228 and 230 assert the busy signal BUSY_OUT to the host in synchronization with the clock CLOCK of the CPU 210 as shown in Figs. 4 and 5, and maintain the busy signal BUSY_OUT until the acknowledge end signal ACK_END of the acknowledge control circuit 224 is generated.

In this case, the select logic circuit 202 stores the input data INPUT_DATA received from the host in one of the first and second latch circuits 212 and 214 in response to the strobe signal STROBE and generates the first and second select signals SEL1 and SEL2 to generate the CPU interrupt signal INT. The select logic circuit 202 alternately generates the first and second select signals SEL1 and SEL2 each time the strobe signal STROBE is received. In other words, as shown in Figs. 4 and 5, if the strobe signal STROBE is received after an initial state, the first select signal SEL1 is activated, and if the next strobe signal STROBE is received, the second select signal SEL2 is activated. Hence, the input data INPUT_DATA received from the host is latched in the first and second latch circuits 212 and 214 by the first and second select signals SEL1 and SEL2, respectively.

The first and second interrupt control circuits 204 and 206 generate the first and second interrupt signals INT1 and INT2 from the first and second select signals SEL1 and SEL2, respectively, as shown in Figs. 4 and 5. The first and second interrupt control circuits 204 and 206 maintain the first and second interrupt signals INT1 and INT2 until the first and second interrupt clear signals INT1_CLEAR and INT2_CLEAR are generated from the CPU 210, respectively. The CPU interrupt control circuit 208 supplies the CPU interrupt signal INT to the CPU 210 by the first and second interrupt signals INT1 and INT2. If another interrupt signal is generated before a previously generated interrupt signal INT1 or INT2 is cleared by the CPU 210 as shown in Fig. 5, the CPU interrupt control circuit 208 continues to maintain the interrupt signal INT until that interrupt signal is cleared so that the CPU 210 may implement the next interrupt.

From the interrupt signal INT, the CPU 210 generates the read signal READ to read data stored in the buffer 218 and asserts the software busy signal SW_BUSY of the second busy control circuit 228 at step 300 shown in Fig. 3. The multiplexer 216 selectively generates data latched in the first and second latch circuits 212 and 214 by the multiplexer select signal SEL_MUX of the different logic state which is alternately generated from the select control circuit 220. The selectively generated data is stored in the buffer 218 and supplied to the CPU 210.

The CPU 210 clears a current interrupt by generating one of the first and second interrupt clear signals INT1_CLEAR and INT2_CLEAR at step 302. That is, if the current interrupt signal INT is generated from the first interrupt signal INT1, the CPU 210 generates the first interrupt clear signal INT1_CLEAR, and if it is generated from the second interrupt signal INT2, the CPU 210 generates the second interrupt clear signal INT2_CLEAR. Therefore, the current interrupt is cleared as shown in Figs. 4 and 5. The CPU 210 confirms the current interrupt by checking the state of the CPU interrupt control circuit 208 at step 304. If there is another interrupt, the CPU 210 returns to step 300, and if not, the CPU 210 negates the software busy signal SW_BUSY at step 308.

Meanwhile, the acknowledge start control circuit 222 is triggered by the first or second interrupt clear signal INT1_CLEAR or INT2_CLEAR and generates the acknowledge start signal START_ACK for operating the acknowledge control circuit 224. The acknowledge control circuit 224 loads a value previously written by the CPU 210 in response to the acknowledge start signal START_ACK, begins to count and maintains the acknowledge signal ACK_OUT until the count is ended according to the loaded value as shown in Figs. 4 and 5. The acknowledge control circuit 224 generates the acknowledge end signal ACK_END when the counting is ended.

The busy signal BUSY_OUT which is an output of the third busy control circuit 230 is activated by the strobe signal STROBE and maintains its state. If the acknowledge end signal ACK_END is generated, the busy signal BUSY_OUT is negated.

Therefore, successive data of two bytes can be received. If the host interface circuit of the invention is used in a low-speed image forming apparatus and connected to a high-speed host, collisions between received data and loss of data can be prevented. That is, even if subsequent data and the strobe signal are transmitted before the busy signal is generated from the image forming apparatus after the host transmits data of one byte, the subsequent data can be received without loss. Furthermore, since the acknowledge signal ACK_OUT is generated by hardware of the acknowledge start control circuit 222 and the acknowledge control circuit 224, the CPU 210 can be more efficiently used. Consequently, the speed of interface with the host can be raised and the loss of data eliminated even though a high-speed host is connected to a low-speed image forming apparatus.

## Claims

1. A host interface circuit, for interfacing parallel data received from a host to an image forming apparatus, comprising a select logic circuit for generating alternate select signals on receipt of successive strobe input signals from a host and first and second latch circuits for latching data received from the host in response to the select signals, whereby data received from the host is latched in alternate latch circuits on receipt of successive strobe input signals from the host.

2. A host interface circuit according to claim 1 in which the select logic circuit is adapted to activate alternate first and second select signals on receipt of successive strobe input signals and the first and second latch circuits are adapted to latch data in response to the first and second select signals respectively.

3. A host interface circuit according to claim 1 or claim 2 comprising means for sequentially reading the data latched in the latch circuits.

4. A host interface circuit according to claim 3 in which the means for sequentially reading the data comprises:
a select control circuit for switching the logic state of a multiplexer select signals whenever a read signal is received; and
a multiplexer for outputting data latched in the first or second latch circuit according to the logic state of the multiplexer select signal.

5. A host interface circuit according to claim 3 comprising:
a first interrupt control circuit for generating a first interrupt signal in response to the first select signal and for clearing the first interrupt signal on receipt of a first interrupt clear signal;
a second interrupt control circuit for generating a second interrupt signal in response to the second select signal and for clearing the second interrupt signal on receipt of a second interrupt clear signal; and
a CPU interrupt control circuit for generating a CPU interrupt signal each time the first or second interrupt signals are generated.

6. A host interface circuit according to claim 4 comprising:
a first interrupt control circuit for generating a first interrupt signal in response to the first select signal and for clearing the first interrupt signal on receipt of a first interrupt clear signal;
a second interrupt control circuit for generating a second interrupt signal in response to the second select signal and for clearing the second interrupt signal on receipt of a second interrupt clear signal;
a CPU interrupt control circuit for generating a CPU interrupt signal each time the first or second interrupt signals are generated;
a CPU adapted to generate such a read signal each time the CPU interrupt signal is generated and to generate whichever of the first and second interrupt clear signals corresponds to the current interrupt.

7. A host interface circuit according to claim 5 or claim 6 in which the CPU interrupt control circuit is adapted, on receipt of another interrupt signal before a previous interrupt signal is cleared, to maintain the CPU interrupt signal until that other interrupt signal is cleared.

8. A host interface circuit according to claim 7 in which the CPU is adapted, if the CPU interrupt signal is maintained after an interrupt clear signal is generated, to generate a further read signal and the other interrupt clear signal.

9. A host interface circuit according to any one of claims 5-8 further comprising:
an acknowledge start control circuit for generating an acknowledge start signal when either interrupt signal is cleared by an interrupt clear signal; and
an acknowledge control circuit for asserting an acknowledge signal to the host in response to the acknowledge start signal, negating the acknowledge signal after a given time and generating an acknowledge end signal.

10. A host interface circuit according to claim 9 in which the acknowledge start control circuit is adapted, if another interrupt signal is active after a previous interrupt signal has been cleared, to generating the acknowledge start signal when the other interrupt signal is cleared by an interrupt clear signal.

11. A host interface circuit according to claim 9 or claim 10 comprising means for asserting a busy signal to the host from receipt of the strobe signal until the acknowledge signal is ended.

12. A host interface circuit according to claim 11 in which the means for asserting the busy signal comprises:
a first busy control circuit for generating a hardware busy signal in response to the strobe input signal until the acknowledge end signal is generated;
a second busy control circuit for generating a software busy signal under the control of the CPU; and
a third busy circuit for asserting the busy signal when both the hardware busy signal and said software busy signal are in an asserted state.

13. A host interface circuit according to any preceding claim, further comprising a noise filter for filtering the strobe input signal and supplying the filtered strobe input signal to the select logic circuit.

14. A host interface circuit, for interfacing parallel data received from a host to an image forming apparatus, as described with reference to and as illustrated in FIGs. 2 et seq. of the accompanying drawings.
